# EUROPÄISCHE PATENTANMELDUNG

(11) **EP 4 528 994 A1**
(43) Veröffentlichungstag der Anmeldung: **26.03.2025**
(21) Anmeldenummer: 24200886.0
(22) Anmeldetag: 17.09.2024
(51) Int. Cl.: H02K 5/18, H02K 5/08, H02K 5/10, B64U 50/19

(54) **ELEKTRISCHER DROHNENMOTOR**

(30) Priorität: 21.09.2023 DE 102023125688
(71) Anmelder: IBAK Helmut Hunger GmbH & Co. KG, 24148 Kiel (DE)
(72) Erfinder: Rocho, Jannis, 24148 Kiel (DE)
(74) Vertreter: Patentanwälte Hemmer Lindfeld Frese Partnerschaft mbB

(57) **Zusammenfassung**

Die Erfindung betrifft einen elektrischen Drohnenmotor (2) zum Antrieb einer Flugdrohne, welcher einen Stator (8), einen Rotor (10), eine mit dem Rotor (10) verbundenen Welle (12) sowie ein den Stator (8) und den Rotor (10) umgebendes Motorgehäuse (6) mit einer Gehäusewandung aufweist, welche sowohl an Ihrer Außenseite als auch an Ihrer Innenseite mit einer Rippenstruktur ausgebildet ist, sowie eine Flugdrohne mit einen solchen elektrischen Drohnenmotor (2) zum Antrieb eines Propellers (4).

## Beschreibung

Die Erfindung betrifft einen elektrischen Drohnenmotor zum Antrieb einer Flugdrohne sowie eine Flugdrohne mit einem solchen elektrischen Drohnenmotor.

Flugdrohnen mit Kameras werden zu vielfältigen Inspektionszwecken eingesetzt. Üblicherweise weisen die Flugdrohnen vier Propeller auf, welche jeweils von einem elektrischen Antriebsmotor angetrieben werden. Dazu müssen die elektrischen Antriebsmotoren möglichst leicht ausgebildet sein. Beim Einsatz in schmutzigen und insbesondere feuchten Umgebungen besteht das Risiko, dass die Motoren verunreinigt werden und deren ordnungsgemäße Funktion beeinträchtigt wird. Dieses Problem stellt sich insbesondere beim Einsatz von Flugdrohnen zur Inspektion von Kanalbauwerken, wie Abwasserkanälen etc., bei welcher eine Beaufschlagung der Flugdrohne mit Schmutzwasser nicht ausgeschlossen werden kann.

Vor diesem Hintergrund ist es Aufgabe der Erfindung, einen elektrischen Drohnenmotor dahingehend zu verbessern, dass er unempfindlicher gegen Feuchtigkeit und Verunreinigungen ist. Diese Aufgabe wird durch einen elektrischen Drohnenmotor mit den in Anspruch 1 angegebenen Merkmalen sowie durch eine Flugdrohne mit den in Anspruch 14 angegebenen Merkmalen gelöst. Bevorzugte Ausführungsformen ergeben sich aus den Unteransprüchen, der nachfolgenden Beschreibung sowie den beigefügten Figuren.

Der elektrische Drohnenmotor gemäß der Erfindung ist zum Antrieb eines Propellers einer Flugdrohne ausgebildet. Flugdrohnen weisen üblicherweise mehrere, in der Regel vier Propeller auf, welche jeweils durch einen elektrischen Drohnenmotor angetrieben werden. Hierfür ist der erfindungsgemäße Drohnenmotor ausgebildet. Der elektrische Drohnenmotorweist einen Stator und einen Rotor auf, welcher derart drehbar gelagert ist, dass ersich relativ zu dem Stator drehen kann. Mit dem Rotor verbunden ist eine Welle, welche zur Verbindung mit einem Propeller dient, sodass der Propeller durch den drehenden Rotor drehend angetrieben wird. Erfindungsgemäß ist vorgesehen, dass der elektrische Drohnenmotor in einem Motorgehäuse angeordnet bzw. gekapselt ist. Das Motorgehäuse schützt somit den elektrischen Motor, bestehend aus Stator und Rotor vor Verunreinigungen, insbesondere Verunreinigungen, welche den Motor blockieren oder dessen Funktion beeinträchtigen könnten. Bevorzugt sind auch erforderliche Lager von Welle und/oder Rotor im Inneren des Motorgehäuses anordnet. Ferner hält das Motorgehäuse Feuchtigkeit von den elektrischen Bauteilen des Motors fern. Besonders bevorzugt ist das Motorgehäuse dazu wasser- und staubdicht ausgebildet.

In besonderer Ausgestaltung kann der Drohnenmotor ein Außenläufermotor sein, bei welchem der Rotor als Außenläufer ausgebildet ist, sodass er einen feststehenden zentralen Stator außenumfänglich umgibt und im Außenumfang des Stators rotiert. Die Ausgestaltung als Außenläufermotor ermöglicht eine gute Kühlung der Motorwicklungen, welche vorzugsweise im Stator gelegen sind, durch eine von dem Rotor erzeugte Luftverwirbelung und/oder Luftströmung im Umfangsbereich des Stators.

Das den Rotor umgebende Motorgehäuse weist eine Gehäusewandung auf, welche den Motor insbesondere außenumfänglich umgibt. Dabei erstreckt sich die Gehäusewandung im Außenumfang ringförmig zu der Drehachse des Motors, d.h. der Drehachse der Welle. Erfindungsgemäß weist diese Gehäusewandung sowohl an ihrer Außenseite als auch an ihrer Innenseite Erhebungen und/oder Einbuchtungen zur Vergrößerung der inneren und der äußeren Oberfläche. Diese Erhebungen und/oder Einbuchtungen bilden vorzugsweise eine Rippenstruktur, durch welche die Gehäuseoberfläche innen und außen vergrößert wird. Diese durch Erhebungen und/oder Einbuchtungen vergrößerte innere und äußere Oberfläche, vorzugsweise in Form einer Rippenstruktur, ermöglicht eine ausreichende Kühlung des elektrischen Antriebsmotos trotz der Kapselung durch das Motorgehäuse. Dabei ist wesentlich, dass die Oberfläche der Gehäusewandung sowohl am Innenumfang als auch am Außenumfang vergrößert ist, beispielsweise durch eine Rippenstruktur. Insbesondere, wenn der elektrische Antriebsmotor mit einem als Außenläufer ausgebildeten Rotor versehen ist, gibt es keinen direkten wärmeleitenden Kontakt zwischen Bauteilen des Motors, insbesondere zwischen der die elektrischen Wicklungen aufweisenden Statorstruktur und der Innenwandung des Motorgehäuses, sodass auch die Innenseite der Gehäusewandung mit Luft in Kontakt ist. Der Wärmeübergang von dem sich erwärmenden Stator auf das Motorgehäuse erfolgt so über die Luft im Inneren des Motorgehäuses. Dabei wird durch die vergrößerte Oberfläche, z.B. durch die Rippenstruktur, jeweils ein guter Wärmeübergang von der Luft im Inneren des Motorgehäuses auf die Gehäusewandung und dann an der Außenseite von der Gehäusewandung an die Umgebungsluft sichergestellt. Die Größe der Oberfläche ist somit vorzugsweise so dimensioniert, dass bei dem gewählten Gehäusematerial über die Oberfläche die vom Motor erzeugte Wärme durch die Wandung des Motorgehäuses nach außen abgeführt werden kann. An der Außenseite kann das Motorgehäuse durch Luft gekühlt werden, welche aufgrund der Flugbewegung der Flugdrohne oder durch den Propeller an dem Motorgehäuse vorbeigeführt wird. Die erfindungsgemäße Ausgestaltung ermöglicht somit einen Schutz des elektrischen Antriebsmotors vor Verunreinigungen und Feuchtigkeit bei gleichzeitig weiter gegebenen guten Kühleigenschaften.

Für die ausreichende Wärmeabfuhr durch das Motorgehäuse nach außen ist es bevorzugt, dass die innere Oberfläche, d.h. die flächige Ausdehnung der inneren Oberfläche der Gehäusewandung im Wesentlichen der äußeren Oberfläche, d.h. der flächigen Ausdehnung der äußeren Oberfläche entspricht. Bevorzugt weist die Innenseite der Gehäusewandung eine Oberfläche auf, deren Größe wenigstens 80% und weiter bevorzugt wenigstens 90% der Oberfläche an der Außenseite der Gehäusewandung entspricht.

In einer bevorzugten Ausgestaltung weist das Motorgehäuse eine erste Stirnseite auf, welche geschlossen ausgebildet ist und eine Wellendurchführung hat, durch welche sich die Welle aus dem Motorgehäuse nach außen erstreckt. Bevorzugt ist die Wellendurchführung mit einer Wellendichtung versehen, welche das Eindringen von Feuchtigkeit und Verunreinigungen im Bereich der Wellendurchführung verhindert. Auch die geschlossene Stirnseite kann mit einer Rippenstruktur zur Verbesserung des Wärmeüberganges versehen sein.

Gemäß einer weiteren bevorzugten Ausführungsform ist der umfängliche Teil der Gehäusewandung zu mehr als 50%, weiter bevorzugt zu mehr als 80%, d.h. im Wesentlichen vollständig mit einer Rippenstruktur versehen, sodass die Rippen vorzugsweise im gesamten Umfangsbereich der umfänglichen Gehäusewandung angeordnet sind und sich weiter bevorzugt im Wesentlichen über die gesamte axiale Erstreckung der umfänglichen Gehäusewandung ausdehnen bzw. über diese verteilt angeordnet sind.

In einer weiteren bevorzugten Ausgestaltung weist das Motorgehäuse eine zweite Stirnseite auf, welche offen ausgebildet ist. Durch diese offene Stirnseite können Rotor und Stator in das Motorgehäuse eingesetzt werden bzw. kann das Motorgehäuse über die Anordnung aus Rotor und Stator gestülpt werden. Die offene Stirnseite des Motorgehäuses ist dabei bevorzugt durch ein Trägerelement des Stators verschlossen bzw. mit dem den Stator tragenden Trägerelement verbunden, bevorzugt lösbar verbunden. Beispielsweise können Schrauben zur lösbaren Verbindung zwischen dem Motorgehäuse und dem Trägerelement angeordnet sein. Weiter bevorzugt ist zwischen dem Trägerelement und dem Motorgehäuse eine Dichtung angeordnet, um ein Eindringen von Verschmutzungen und Feuchtigkeit im Bereich der Schnittstelle zwischen Motorgehäuse und Trägerelement zu vermeiden. Um elektrische Anschlussleitungen des Motors in das Innere des Motorgehäuse zu führen, kann im Bereich des Motorgehäuses und/oder im Bereich des Trägerelementes ferner eine gedichtete Kabeldurchführung vorgesehen sein.

Gemäß einer weiteren bevorzugten Ausführungsform ist die Rippenstruktur an der Innenseite und der Außenseite der Gehäusewandung durch einen mäanderförmigen bzw. wellenförmigen, bzw. faltenförmigen und/oder gezackten Verlauf der Gehäusewandung ausgebildet. D.h. die Gehäusewandung verläuft im Querschnitt derart mäanderförmig bzw. gewellt und/oder gezackt, dass sowohl an der Innen- als an der Außenseite abwechselnd Vorsprünge und Vertiefungen ausgebildet sind, welche die genannte Rippenstruktur definieren.

Dabei kann die Gehäusewandung an den Stellen, an denen sich ihre Erstreckungsrichtung ändert, gerundet ausgebildet sein, sodass sich im Wesentlichen ein eher mäander- bzw. wellförmiger Verlauf ergibt. Alternativ kann die Gehäusewandung mit gewinkelten Richtungsänderungen versehen sein, sodass sich eher ein gezackter Verlauf ergibt.

Besonders bevorzugt weist die Gehäusewandung im Bereich der Rippenstruktur eine im Wesentlichen konstante Wandstärke auf. D.h. die Rippen bzw. die Vorsprünge, welche die Rippen bilden, werden nicht durch eine größere Wandstärke der Umfangswandung gebildet, sondern durch einen gewellten bzw. faltenförmigen Verlauf der Umfangswandung, wobei die Umfangswandung im Bereich der Wellen bzw. Falten vorzugsweise eine im Wesentlichen konstante Wandstärke aufweist. Die konstante Wandstärke weist die Wandung dabei sowohl im Bereich von sich im Wesentlichen radial erstreckenden Wandflächen der Umfangswandung als auch im Bereich von sich im Wesentlichen in Umfangsrichtung erstreckenden Abschnitten der Umfangswandung auf. Besonders bevorzugt ist die Wandstärke kleiner als 1 mm und weiter bevorzugt 0,8 mm oder kleiner. Durch diese dünne Wandstärke wird ein guter Wärmedurchlass, welcher im Wesentlichen unabhängig von der Wärmeleitfähigkeit des Materials ist, realisiert.

Die beschriebene Rippenstruktur an der Innenseite der Gehäusewandung und an der Außenseite der Gehäusewandung wird vorzugsweise von sich abwechselnden vorstehenden Rippen und Nuten gebildet, wobei die Rippen und Nuten weiter bevorzugt gleichmäßig über die umfängliche Erstreckung und/oder die axiale Erstreckung der Gehäusewandung, d.h. zumindest des umfänglichen Abschnittes der Gehäusewandung verteilt sind.

Die Gehäusewandung ist vorzugsweise so ausgebildet, dass Erhebungen an der Außenseite der Gehäusewandung gelichzeitig Einbuchtungen an der Innenseite definieren. So kann eine Gehäusewandung mit im Wesentlichen konstanter Wandstärke und im Wesentlichen gleich gro-ßen Oberflächen an der Innenseite und an der Außenseite geschaffen werden. Im Falle einer Rippenstruktur ist diese vorzugsweise so ausgebildet, dass jeweils eine an der Innenseite der Gehäusewandung gebildete Nut innerhalb einer an der Außenseite nach außen vorstehenden Rippe gelegen ist und jeweils eine an der Außenseite gebildete Nut innerhalb einer an der Innenseite nach innen vorstehenden Rippe gelegen ist. Eine solche Struktur bildet einen wellen- oder faltenförmigen Verlauf der Umfangswandung, welcher bei im Wesentlichen konstanter Materialstäre bzw. Wandstärke realisiert werden kann. Hierdurch wird eine große Oberfläche, vorzugsweise im Wesentlichen gleich große Oberfläche sowohl an der Innenseite der Gehäusewandung als auch der Außenseite der Gehäusewandung realisiert und aufgrund der vorzugsweise im Wesentlichen konstanten Wandstärke in allen Bereichen ein guter Wärmedurchgang gewährleistet. Die Rippen der Rippenstruktur können sich bezogen auf die Längsachse der Welle bzw. die Drehachse des Motors in Umfangsrichtung oder aber parallel zu der Längsachse erstrecken. Die Anordnung der Rippen in Längsrichtung, d.h. parallel zur Längsachse hat den Vorteil, dass Luft, welche in Axialrichtung über die Innenseite und/oder die Außenseite des Motorgehäuses strömt, besser die gesamte Oberfläche der Gehäusewandung überströmen kann, da die Strömungsrichtung der Luft dann entlang der Rippen, d.h. entlang der die Rippen bildenden Nuten und Vorsprünge verläuft.

Das Motorgehäuse kann erfindungsgemäß aus Kunststoff gefertigt sein, bevorzugt aus einem ausreichend temperaturbeständigen Kunststoff, beispielsweise aus Polyamid PA6. Dabei ist das Motorgehäuse aus Kunststoff weiter bevorzugt in einem additiven Fertigungsverfahren, d.h. beispielsweise im 3D-Druck gefertigt. Die Fertigung im 3D-Druck hat den Vorteil, dass die Rippenstruktur auch mit Hinterschneidungen ausgebildet werden kann, welche gusstechnisch schwer oder gar nicht realisiert werden können. Darüber hinaus kann die im Wesentlichen konstante Wandstärke in der Rippenstruktur durch additive Fertigung bzw. 3D-Druck in günstiger Weise realisiert werden. Ein Kunststoffmaterial wie Polyamid PA6 kann gut im 3D-Druck verarbeitet werden. Alternativ könnte das Motorgehäuse auch aus Metall gefertigt werden, auch dies wäre im 3D-Druck möglich.

Gemäß einer besonderen Ausführungsform der Erfindung kann im Inneren des Motorgehäuses ein mit dem Rotor oder der Welle drehfest verbundener Lüfter angeordnet sein. Ein solcher Lüfter kann einen oder mehrere, vorzugsweise mehrere symmetrisch zueinander angeordnete Flügel aufweisen, welche sich bezogen auf die Drehachse des Motors radial nach außen erstrecken. Dabei können die Flügel gerade ausgebildet sein. Beispielsweise können vier Flügel vorhanden sein, welche sich in zwei um 90 Grad zueinander gewinkelten diametralen Richtungen bezüglich der Drehachse erstrecken. Ein solcher Lüfter im Inneren des Motorgehäuses führt zur Verwirbelung bzw. Bewegung der Luft im Inneren des Motorgehäuses, durch welche die Wärmeübertragung von dem Motor auf die Innenwandung des Motorgehäuses verbessert wird. Bevorzugt ist ein Spalt zwischen dem Außenumfang des Motors, beispielsweise zwischen dem Außenumfang eines als Außenläufer ausgebildeten Rotors und dem Innenumfang der Gehäusewandung sehr klein ausgebildet. Dennoch verbleibt ein Luftspalt, in dem Luft zirkulieren kann. Im Bereich der Vertiefungen der Rippenstruktur am Innenumfang weist der Luftspalt darüber hinaus eine größere radiale Ausdehnung auf, sodass in diesem Bereich eine stärkere Luftzirkulation möglich ist.

Der beschriebene erfindungsgemäße elektrische Drohnenmotor ist zur Verwendung in einer Flugdrohne, insbesondere in einer für die Inspektion von Kanalbauwerken ausgebildeten Flugdrohne vorgesehen bzw. ausgestaltet. Gegenstand der Erfindung ist ferner auch eine solche Flugdrohne, besonders bevorzugt eine Flugdrohne, welche zur Inspektion von Kanalbauwerken, beispielsweise Abwasserkanälen ausgestaltet ist. Die Flugdrohne weist zumindest einen, vorzugsweise zwei, drei, vier oder mehr Propeller auf, über welche die Flugdrohne zum einen vertikal bewegt bzw. in Schwebe gehalten werden kann, zum anderen aber auch vor- und zurück sowie ggf. seitwärts bewegt werden kann. Auch ein Kurvenflug kann durch entsprechende Ansteuerung der Propeller realisiert werden. Die Flugdrohne weist darüber hinaus zumindest eine Kamera zur Inspektionszwecken auf. Die Kamera kann in üblicher Weise schwenkbar, insbesondere an einem Gimbal angeordnet sein und ein oder mehrere Objektive aufweisen. Ferner kann die Drohne mit Beleuchtungseinrichtungen und ggf. weiteren Sensoren sowie einer geeigneten Steuerelektronik sowie mit Kommunikationsmitteln wie einem Funkempfänger und - sender ausgestattet sein. Erfindungsgemäß weist zumindest ein Propeller zu seinem Antrieb einen elektrischen Drohnenmotor auf, wie er vorangehend beschrieben wurde. Besonders bevorzugt weisen alle Propeller jeweils einen elektrischen Drohnenmotor auf, wie er vorangehend beschrieben wurde. Zur Energieversorgung der elektrischen Drohnenmotoren, sowie der weiteren elektronischen Komponenten der Flugdrohne ist die Flugdrohne vorzugsweise in bekannter Weise mit einer Batterie bzw. einem Akku versehen.

Nachfolgend wird die Erfindung beispielhaft anhand der beigefügten Figuren beschrieben. In diesen zeigt:
- Fig. 1: eine perspektivische Ansicht eines erfindungsgemäßen elektrischen Drohnenmotors gemäß einer ersten Ausführungsform der Erfindung,
- Fig. 2: eine Schnittansicht des elektrischen Drohnenmotors gemäß Figur 1 in Längsrichtung,
- Fig. 3: eine Schnittansicht des Drohnenmotors gemäß Figuren 1 und 2 entlang der Linie III-III in Figur 2,
- Fig. 4: eine perspektivische Ansicht eines erfindungsgemäßen elektrischen Drohnenmotors gemäß einer zweiten Ausführungsform,
- Fig. 5: eine Schnittansicht des Drohnenmotors gemäß Figur 4 in Längsrichtung,
- Fig. 6: eine Schnittansicht des Drohnenmotors gemäß Figuren 4 und 5 entlang der Linie VI-VI in Figur 5, und
- Fig. 7: schematisch eine Flugdrohne mit vier Drohnenmotoren.

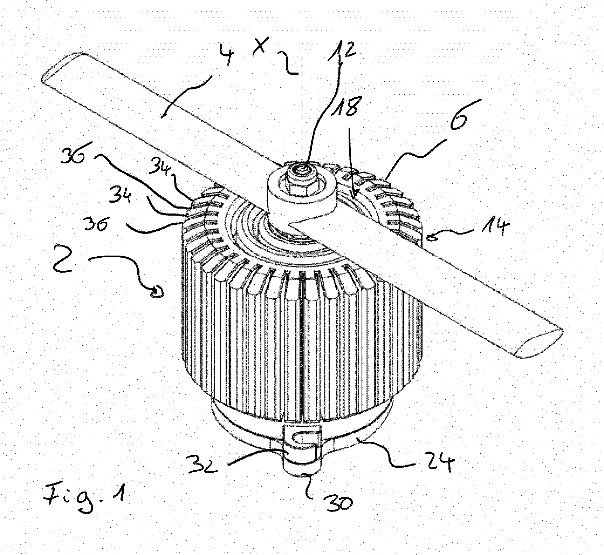

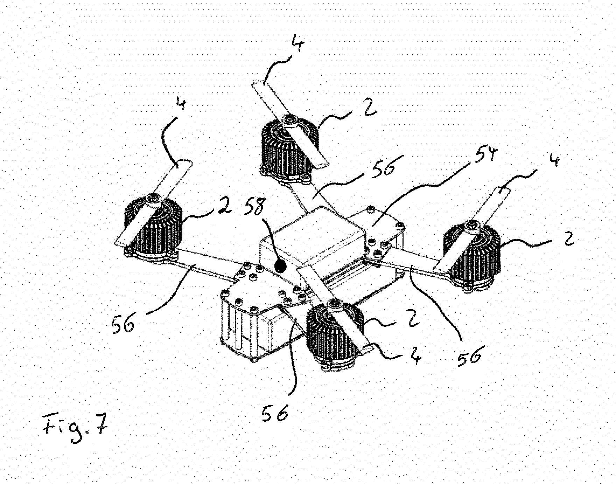

Figur 1 zeigt in einer perspektivischen Ansicht ein erstes Beispiel für einen Drohnenmotor 2, welcher zum Antrieb eines Propellers 4 ausgebildet ist. Übliche Drohnen, wie sie mit Kameras 58 zu Beobachtungszwecken ausgestattet sind, weisen vier solche Propeller 4 auf, welche jeweils von einem elektrischen Drohnenmotor 2 angetrieben werden. Durch entsprechende Ansteuerung der Drohnenmotoren 2 kann die Drehzahl der Propeller 4 variiert werden, wodurch die Fluglage der Drohnen gesteuert werden kann. Der erfindungsgemäße Drohnenmotor 2 weist ein Motorgehäuse 6 auf, durch welches der elektrische Antriebsmotor nach außen gekapselt ist. Figur 7 zeigt ein Beispiel für eine Flugdrohne mit vier Propellern 4, welche jeweils von einem Drohnenmotor 2 angetrieben werden.

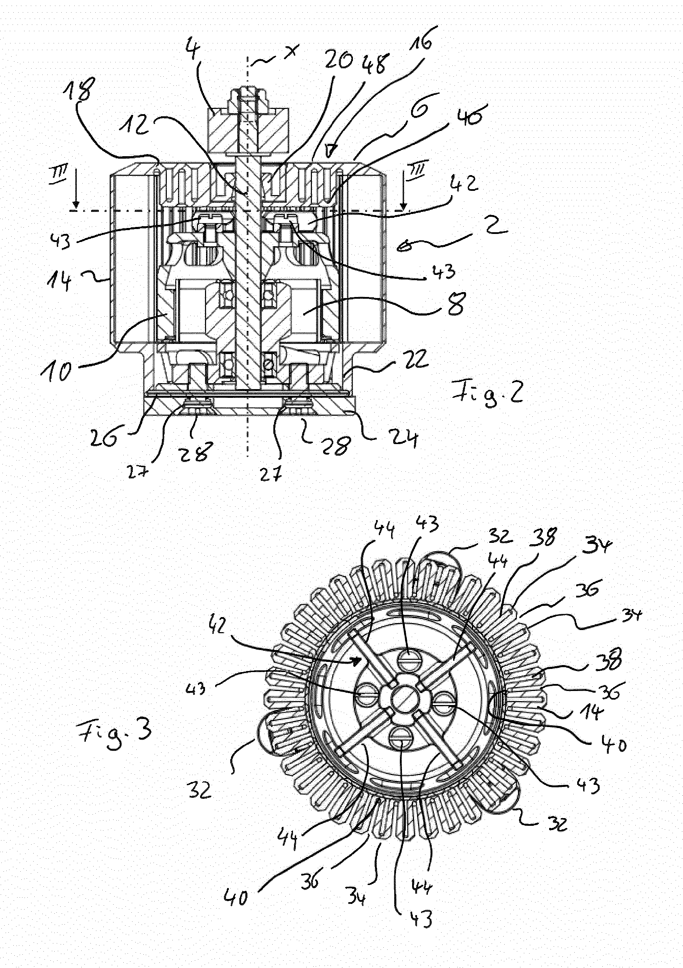

Wie in der Schnittansicht gemäß Figur 2 zu sehen ist, weist der eigentliche elektrische Antriebsmotor des Drohnenmotors 2 einen innenliegenden Stator 8 mit einem diesen umgebenden, als Außenläufer ausgebildeten Rotor 10 auf. Der Rotor 10 ist drehfest an einer drehbar gelagerten Welle 12 befestigt, welche ebenfalls drehfest mit dem Propeller 4 verbunden ist. Die Welle 12 ist in einem Mittelteil des Stators 8 drehbar gelagert. Der drehbare Rotor 10 wird außenumfänglich von dem topfförmigen Motorgehäuse 6 umgeben. Das Motorgehäuse 6 weist eine Gehäusewandung auf. Die Gehäusewandung hat einen ersten Gehäuseabschnitt in Form einer Umfangswandung 14, welche den Rotor 10 bezogen auf die Längs- bzw. Drehachse X außenumfänglich umgibt. An einer ersten Stirnseite weist das Motorgehäuse 6 einen weiteren Abschnitt der Gehäusewandung in Form einer Stirnwand 18 auf, welche einstückig mit der Umfangswandung 14 ausgebildet ist. Die Stirnwand 18 verschließt das Motorgehäuse 6 stirnseitig und weist in ihrem Zentralbereich eine Wellendurchführung mit einer Wellendichtung 20 auf, durch welche sich die Welle 12 nach außen erstreckt. Dabei ist der Propeller 4 an der Außenseite des Motorgehäuses 6 gelegen, währen der Rotor 10 und der Stator 8 im Inneren des Motorgehäuses 6 angeordnet sind. An der in Richtung der Längsachse X entgegengesetzten zweiten Stirnseite ist das Motorgehäuse 6 offen ausgebildet, sodass durch die dort vorhandene Öffnung 22 der Stator 8 mit dem Rotor 10 in das Innere des Motorgehäuses 6 eingesetzt werden kann. Die Öffnung 22 ist durch ein plattenförmiges Trägerelement 24 verschlossen, wobei zwischen dem Motorgehäuse 6 und den plattenförmigen Trägerelement 24 eine Dichtung 26 angeordnet ist. An dem Trägerelement 24 ist der Stator 8 über Schrauben 28 befestigt, wobei in den gezeigten Beispielen diese Schraubenverbindungen jeweils mit einem Dichtring 27 versehen sind.

Das Trägerelement 24 weist in diesem Ausführungsbeispiel drei radial nach außen vorstehende Auskragungen 30 auf. Das Motorgehäuse 6 weist angrenzend an die Öffnung 22 an der zweiten Stirnseite drei korrespondiere radial auskragende Befestigungslaschen 32 auf. Die Auskragungen 30 und Befestigungslaschen 32 sind derart korrespondiert zueinander ausgebildet, dass sie parallel aneinander angrenzen. Durch in den Auskragungen 30 ausgebildete Löcher und in den Befestigungslaschen 32 ausgebildete Ausnehmungen können sich Schrauben zur lösbaren Verbindung vom Motorgehäuse 6 und Trägerelement 24 erstrecken.

Um trotz der Einkapselung des elektrischen Motors eine ausreichende Kühlung zu gewährleisten, weist das Motorgehäuse 6 an seiner Umfangswandung 14 eine Rippenstruktur auf, welche durch einen gefalteten bzw. welligen Verlauf der Umfangswandung 14 realisiert ist. So weist die Umfangswandung 14 nach außen gerichtete Vorsprünge 34 auf, welche sich in diesem Ausführungsbeispiel parallel zur Längs- bzw. Drehachse X erstreckende Rippen bilden. Zwischen diesen länglichen Vorsprüngen 34 sind entsprechend länglich verlaufende Nuten 36 gelegen. Somit ergibt sich ein im Querschnitt mäanderförmiger bzw. gewellter Verlauf der Umfangswandung 14. Die Umfangswandung 14 weist dabei über den gewellten bzw. gefalteten Verlauf eine im Wesentlichen konstante Wandstärke auf. Auf diese Weise werden im Bereich der an der Außenseite gelegenen Vorsprünge 34 zum Innenumfang hin geöffnete Nuten 38 gebildet, während im Bereich der Nuten 36, welche am Außenumfang gelegen sind, nach innen gerichtete Vorsprünge 40 ausgebildet sind. Diese so ausgebildete Rippenstruktur erstreckt sich über den gesamten Umfang. Durch die konstante sehr dünne Wandstärke und gleichzeitig große Oberfläche wird ein guter Wärmedurchlass von innen nach au-ßen realisiert. Insbesondere hat die innere Oberfläche der Umfangswandung 14 nur eine geringfügige geringere Größe als die äußere Oberfläche. Vorzugsweise hat die innere Oberfläche eine Größe, welche mehr als 90% der Größe der äußeren Oberfläche entspricht. Zwischen dem Rotor 10 und dem Innenumfang der Umfangswandung 14, das heißt den radial innenliegenden Seiten der Vorsprünge 40, ist ein Luftspalt ausgebildet. Um die Luft im Inneren des Motorgehäuses 6 umzuwälzen bzw. zu verwirbeln, ist im Inneren des Motorgehäuses 6 an der Welle 12 ein Lüfter 42 angeordnet, welcher in dieser Ausführungsform vier sich radial erstreckende Flügel 44 aufweist. Der Lüfter 42 ist mit dem Rotor 10 über Schrauben 43drehfest verbunden.

In diesem Ausführungsbeispiel weist auch die Stirnwand 18 eine entsprechend gewellte bzw. gefaltete Struktur auf, das heißt die Wand ist so geformt, dass sie bei im Wesentlichen konstanter Wandstärke abwechselnd nach innen gerichtete und nach außen gerichtete Ausstülpungen 46 und 48 bildet. Auf diese Weise werden ringförmige Rippen in der Stirnwandung 18 gebildet.

Das einstückige Motorgehäuse 6 mit der Stirnwand 18 und der Umfangswandung 14 ist bevorzugt aus Kunststoff, beispielsweise Polyamid PA6 mit einer Wandstärke kleiner als 1 mm, weiter bevorzugt in der Größenordnung von 0,8mm oder kleiner ausgebildet. Eine derart dünne Struktur mit der gezeigten komplexen Form, kann bevorzugt durch ein additives Fertigungsverfahren, wie 3D-Druck generiert werden. Bei der beschriebenen dünnen Wandstärke, welche über die gesamte Gehäusewandung des Motorgehäuses 6, das heißt die Umfangswandung14 und die Stirnwand 18 im Wesentlich konstant ist, kommt es auf die Wärmeleitfähigkeit des verwendeten Materials für den Wärmedurchgang im Wesentlichen nicht an. So ist es möglich, ein leichtes, dünnes und dichtes Gehäuse zu schaffen, welches gleichzeitig einen guten Wärmedurchgang zur Kühlung des elektrischen Motors ermöglicht.

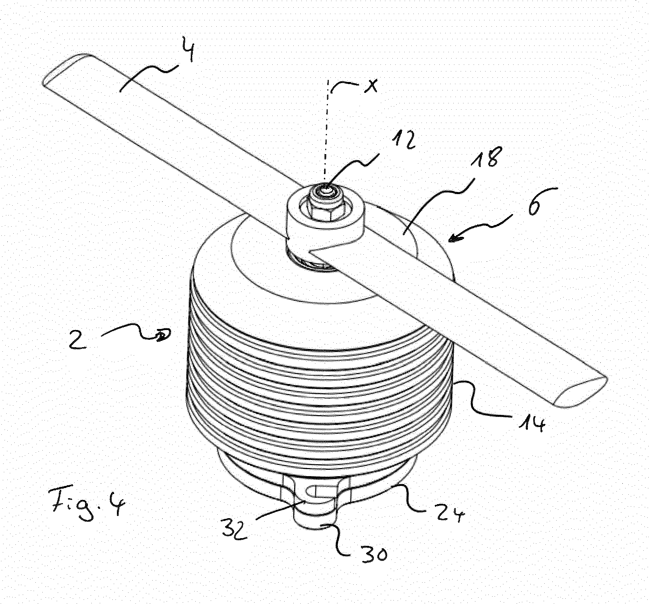

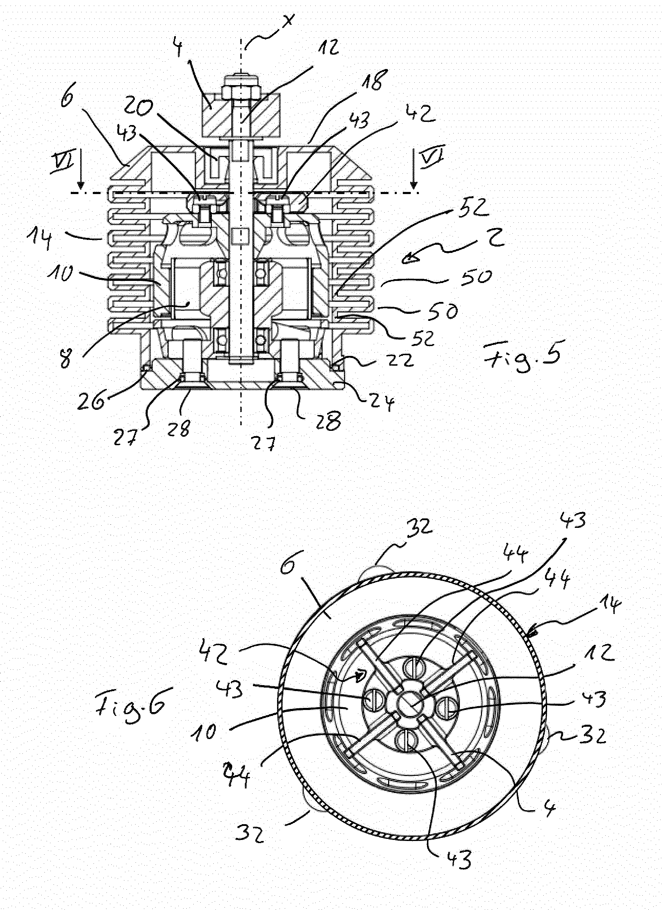

In den Figuren 4 bis 6 ist eine zweite Ausführungsform der Erfindung gezeigt, welche sich gegenüber der vorangehend beschriebenen Ausführungsform darin unterscheidet, dass sich die Rippen der Rippenstruktur in der Umfangswandung 14 nicht parallel zur Längsachse X, sondern umfänglich zur Längsachse X erstrecken. Die übrige Ausgestaltung entspricht der Ausgestaltung, wie sie anhand der Figuren 1 bis 3 beschrieben wurde. Nachfolgend werden lediglich die Unterschiede zur der ersten Ausführungsform beschrieben.

Bei der zweiten Ausführungsform gemäß Figuren 4 bis 6 ist die Stirnwand 18 ohne Wellen bzw. Rippen ausgebildet, weist aber wie bei der ersten Ausführungsform eine Wellendurchführung mit einer Wellendichtung 20 auf. Die Umfangswandung 14 weist eine Rippenstruktur auf, welche durch Wellen bzw. Falten der Gehäusewandung realisiert sind. Dabei ist die Umfangswandung 14 so ausgebildet, dass sich in Längsrichtung nach außen erstreckende Vorsprünge 50 mit nach innen gerichteten Vorsprüngen 52 abwechseln. Im Bereich der nach innen gerichteten Vorsprünge 52 werden am Außenumfang sich in Umfangsrichtung erstreckende ringförmige Nuten gebildet, während im Bereich der nach au-ßen gerichteten Vorsprünge 50 am Innenumfang ringförmige Nuten gebildet werden, welche sich in Umfangsrichtung erstrecken. So weist auch im Bereich dieser Rippenstruktur die Umfangswandung 14 eine im Wesentlichen konstante Wandstärke auf, sodass eine große Oberfläche bei einer gleichzeitig durchgehend dünnen Wandstärke geschaffen wird, welche die Wärmeabfuhr aus dem Inneren des Motorgehäuses 6 in die Umgebung ermöglicht. Auch in diesem Beispiel kann die innere Oberfläche der Umfangswandung 14 annähernd die Fläche wie die äußere Oberfläche aufweisen. Auch das Motorgehäuse 6 gemäß der zweiten Ausführungsform der Erfindung ist vorzugsweise aus Kunststoff, beispielsweise Polyamid PA6 ausgebildet, und kann im 3D-Druck gefertigt werden, wodurch die sich aus den sich in Umfangsrichtung erstreckenden Vorsprüngen 50 resultierenden Hinterschneidungen problemlos ausgebildet werden können.

Es ist zu verstehen, dass auch bei dem zweiten Ausführungsbeispiel die Stirnwand 18 mit einer rippenförmigen Struktur wie sie anhand der ersten Ausführungsform beschrieben wurde, versehen sein könnte. Die ringförmigen Vorsprünge 50 und 52 haben den Vorteil, dass sich ein solche Gehäuse leichter in einem spanenden Fertigungsverfahren herstellbar ist.

Die in Figur 7 schematisch gezeigte Flugdrohne weist einen zentralen Drohnenkörper 54 auf, von welchem sich vier Arme 56 nach außen erstrecken, welche an ihren äußeren Enden jeweils einen Drohnenmotor 2, wie er vorangehend beispielhaft beschrieben wurde, mit einem Propeller 4 zeigen. Die in Figur 7 gezeigten Drohnenmotoren entsprechen der Ausführungsform gemäß Figuren 1 bis 3, könnten aber auch gemäß der Ausführungsform in Figuren 4 bis 6 ausgestaltet sein. Der Drohnenkörper 54 kann in bekannter Weise zum Beispiel zumindest eine Kamera 58, Beleuchtungseinrichtungen, Sensoren, Kommunikationsmittel und insbesondere eine Steuerelektronik sowie eine Batterie zur Energieversorgung aufweisen. Auch könnten zusätzlich noch ein oder mehrere Schutzkäfige die Propeller 4 oder die gesamte Drohne umgeben. Dabei könnten jeder Propeller 4 von einem einzelnen Schutzkäfig oder mehrere oder alle Propeller 4 von einem gemeinsamen Schutzkäfig umgeben sein.

### Bezugszeichenliste

- 2: Drohnenmotor
- 4: Propeller
- 6: Motorgehäuse
- 8: Stator
- 10: Rotor
- 12: Welle
- 14: Umfangswandung
- 16: erste Stirnseite
- 18: Stirnwand
- 20: Wellendichtung
- 22: Öffnung
- 24: Trägerelement
- 26: Dichtung
- 27: Dichtring
- 28: Schrauben
- 30: Auskragungen
- 32: Befestigungslaschen
- 34: Vorsprünge
- 36,38: Nuten
- 40: Vorsprünge
- 42: Lüfter
- 43: Schrauben
- 44: Flügel
- 46, 48: Ausstülpungen bzw. Vorsprünge
- 50,52: Vorsprünge
- 54: Drohnenkörper
- 56: Arme
- 58: Kamera
- X: Längs- bzw. Drehachse

## Patentansprüche

1. Elektrischer Drohnenmotor (2) zum Antrieb einer Flugdrohne, welcher einen Stator (8), einen Rotor (10), eine mit dem Rotor (10) verbundene Welle (12) sowie ein den Stator (8) und den Rotor (10) umgebendes Motorgehäuse (6) mit einer Gehäusewandung aufweist, welche sowohl an Ihrer Außenseite als auch an Ihrer Innenseite mit Erhebungen und/oder Einbuchtungen zur Vergrößerung der inneren und der äußeren Oberfläche versehen sind.

2. Elektrischer Drohnenmotor nach Anspruch 1, welcher als Außenläufermotor mit einem zentralen Stator (8) und einem diesen außenumfänglich umgebenden Rotor (10) ausgebildet ist.

3. Elektrischer Drohnenmotor nach Anspruch 1 oder 2, bei welcher die Gehäusewandung sowohl an ihrer Außenseite als auch an ihrer Innenseite mit einer Rippenstruktur ausgebildet ist.

4. Elektrischer Drohnenmotor nach einem der vorangehenden Ansprüche, bei welchem die Gehäusewandung an ihrer Innenseite eine Oberfläche aufweist welche wenigstens 80%, vorzugsweise wenigstens 90% der Oberfläche an der Außenseite entspricht.

5. Elektrischer Drohnenmotor nach einem der vorangehenden Ansprüche, bei welchem das Motorgehäuse (6) wasser- und staubdicht ausgebildet ist.

6. Elektrischer Drohnenmotor (2) nach einem der vorangehenden Ansprüche, bei welchem das Motorgehäuse (6) eine erste Stirnseite (16) aufweist, welche geschlossen ausgebildet ist und eine Wellendurchführung hat, durch welche sich die Welle (12) aus dem Motorgehäuse (6) nach außen erstreckt, wobei die Wellendurchführung vorzugsweise mit einer Wellendichtung (20) versehen ist.

7. Elektrischer Drohnenmotor (2) nach einem der vorangehenden Ansprüche, bei welchem das Motorgehäuse (6) eine zweite Stirnseite aufweist, welche offen ausgebildet und mit einem den Stator (8) tragenden Trägerelement (24) verbunden ist, wobei zwischen dem Trägerelement (24) und dem Motorgehäuse (6) vorzugsweise eine Dichtung (26) angeordnet ist.

8. Elektrischer Drohnenmotor (2) nach einem der vorangehenden Ansprüche, bei welchem die Rippenstruktur an der Innenseite und an der Außenseite der Gehäusewandung durch einen mäanderförmigen und/oder gezackten Verlauf der Gehäusewandung ausgebildet ist.

9. Elektrischer Drohnenmotor (2) nach einem der vorangehenden Ansprüche, bei welchem die Gehäusewandung im Bereich der Rippenstruktur eine konstante Wandstärke aufweist, welche vorzugsweise kleiner als 1 mm, weiter bevorzugt 0,8 mm oder kleiner ist.

10. Elektrischer Drohnenmotor (2) nach einem der vorangehenden Ansprüche, bei welchem die Rippenstruktur an der Innenseite der Gehäusewandung und an der Außenseite der Gehäusewandung jeweils von sich abwechselnden vorstehenden Rippen und Nuten (36, 38) gebildet wird.

11. Elektrischer Drohnenmotor (2) nach einem der vorangehenden Ansprüche, bei welchem die Rippen der Rippenstruktur derart ausgebildet sind, dass jeweils eine an der Innenseite der Gehäusewandung gebildete Nut (36, 38) innerhalb einer an der Außenseite nach außen vorstehenden Rippe gelegen ist und jeweils eine an der Außenseite gebildete Nut (36, 38) innerhalb einer an der Innenseite nach Innen vorstehenden Rippe gelegen ist.

12. Elektrischer Drohnenmotor (2) nach einem der vorangehenden Ansprüche, bei welchem sich die Rippen der Rippenstruktur sich bezogen auf die Längsachse (X) der Welle (12) in Umfangsrichtung oder parallel zu der Längsachse (X) erstrecken.

13. Elektrischer Drohnenmotor (2) nach einem der vorangehenden Ansprüche, bei welchem das Motorgehäuse (6) aus Kunststoff, vorzugsweise in einem additiven Fertigungsverfahren gefertigt ist.

14. Flugdrohne mit zumindest einem, vorzugsweise vier Propellern (4) sowie zumindest einer Kamera (58), wobei zumindest ein Propeller (4) zu seinem Antrieb einen elektrischen Drohnenmotor (2) nach einem der vorangehenden Ansprüche aufweist.
